# EUROPEAN PATENT APPLICATION

(11) **EP 3 168 767 A1**
(43) Date of publication of application: **17.05.2017**
(21) Application number: 16175527.7
(22) Date of filing: 21.06.2016
(51) Int. Cl.: G06F 21/12

(54) **SOFTWARE PROTECTION**

(30) Priority: 13.11.2015 GB 201520047
(71) Applicant: Towers Watson Limited, Reigate, Surrey RH2 9PQ (GB)
(72) Inventor: Beardall, Mark, South Nutfield, Surrey RH1 4EF (GB); Brandman, Melvin, Woodford Green, Essex IG8 8RW (GB)
(74) Representative: Johnson, Carrie-Anne Louise

(57) **Abstract**

A method and system are provided for controlling access to software installed on a storage device. The method comprises determining the physical location of software, or a part thereof, on a storage device. The method compares the determined location of software with a predefined physical location. Where the location and the predefined location do not match, access is denied and/or execution of the software is prevented. A method of and system for activating software is also provided. The method comprises checking one or more parameters to determine if a user is or was entitled to install software on a storage device. The method comprises determining the physical location of the software or a part thereof. The determined physical software location is stored. Data confirming if the software has been successfully activated is also stored.

## Description

### Technical Field

The present invention relates to a system and method for controlling access to software, a computer program or system and/or to activating software, a computer program or system.

### Background to the Invention

Various measures are implemented to ensure only those persons entitled or authorized to access a document or a computer system can do so. For example, password protection for logging on to a computer, or accessing a particular account is extremely common these days. Data can also be protected with encryption. Here, data is encoded or encrypted such that it cannot be accessed or retrieved without the correct key. This is widely used to protect user's rights, privacy and identity, and to stop others from gaining access to that user's data.

However, sophisticated methods for decrypting encrypted data exist, meaning that additional measures are desirable. Further measures are also needed to prevent unauthorized copying of software.

Software piracy - illegally dealing with software without authorization - is rife these days. Software is often protected with a licence. For example, a single user may only be entitled to install the software on a single machine. Copying of that software is software piracy. Other forms of protection are also used, for example activation keys, dongles and other software or cloud based solutions. However, the vast majority of these are prone to hacking, with hacks often being readily available on the internet.

A more robust system that is harder, or impossible, to penetrate is desirable. The present invention has been devised with the foregoing in mind.

### Summary of the invention

According to a first aspect of the present invention there is provided a method of controlling access to software as defined in claim 1.

As such, the invention compares the location of software that has been installed on a storage device, e.g. a computer hard drive, with a predefined location e.g. the location where the software should be installed. If there is a match, i.e. the software is in the right place, access to the software can be granted to enable the software to run. Otherwise, access is denied. The invention makes use of the feature that when software is installed on a storage device, it is "randomly" assigned a location on the storage device in the sense that it is not known in advance where the software will be stored, but the location is chosen according to available storage capacity. When a user tries to run a piece of software, if he is authorised to do, the determined location will match the predefined location enabling the software to be run. If, however, the software has been copied without authorisation, it is extremely unlikely that the new location (and i.e. that which will be determined by the invention) will match the predefined location (i.e. the original or authorised location), in which case access is denied.

In an embodiment, the determined location and/or the predefined physical location is a location co-ordinate such as a sector and block.

The method may further comprise encrypting the determined location and storing the encrypted determined location. The predefined location may also be encrypted. The encryption of the determined location and/or the predefined location may use a set of cryptographic hash functions.

In an embodiment, the method further comprises recording an instance of the method being performed in a database.

According to a second aspect of the present invention there is provided a method of activating software installed on a storage device as defined in claim 7. Alternatively, instead of storing data confirming the software has been successfully activated in accordance with said one or more parameters, the method may provide for storing data confirming the software was not successfully activated in accordance with said one or more parameters. An indication may be provided indicative of why software activation was not successful.

Another aspect of the invention is thus "activating" or "registering" software during or after installation. Here, the location of the authorised software is determined, and this becomes the "predetermined" location referred to above.

In an embodiment, the location is a location coordinate such as a sector and block.

The method may further comprise encrypting the location and storing the encrypted location. The encryption of the location may use a set of cryptographic hash functions.

The method may further comprise determining the presence of a valid licence and/or execution on a predefined network. In an embodiment an internet connection may be required.

The method may further comprise recording information relating to activation of said software including whether or not activation was successful and/or user details.

According to a third aspect of the present invention there is provided a method of activating software installed on a storage device, and controlling access to said software, as defined by a combination of the first and second aspects.

According to a fourth aspect of the present invention there is provided a system for controlling access to software as defined in claim 13.

According to a fifth aspect of the present invention there is provided a system for activating software installed on a storage device as defined in claim 14. Alternatively, instead of storing data confirming the software has been successfully activated in accordance with said one or more parameters, the system may provide be configured to store data confirming the software was not successfully activated in accordance with said one or more parameters.

According to a sixth aspect of the present invention there is provided a system configured to activate software installed on a storage device, and controlling access to said software, as defined by a combination of the fourth and fifth aspects.

In any or all aspects and embodiments, the storage device may be any storage device that utilises a referencing system for recording where software is installed thereon. For example, the storage device may be a magnetic medium storage device such as a magnetic disk or solid state memory disk. It may be part of or otherwise in communication with a user machine or terminal, e.g. a personal computer (PC). The user machine may be in either wired or wireless communication with a server or data centre or suchlike. The server/data centre may be or comprise a database or other storage device and may store authorisation details that e.g. identify a user as being authorised to install and/or run a piece of software. It may also store activity information relating to the software e.g. when it was installed, accessed or attempted to be accessed etc.

"Software" as used herein may refer to a software system, application or program. It may also refer to a computer file or any other type of data that can be stored on an electronic storage device such as a magnetic medium.

Advantageously, aspects and embodiments of the invention can prevent unauthorised copying of or access to the program or file.

Aspects and embodiments of the invention provide for secure running of a program such as an executable and ensure it can only be run if it has gone through a proper activation or registration process. If the proper registration process has not been followed or completed, the software is prevented from running which may then limit or prevent access to other software, system, files etc.

The invention advantageously makes use of the feature that when a system or software is installed, this happens in a random or semi-random manner. I.e. on installation, software is stored in one or more locations (sectors and blocks) depending on existing storage constraints. A small installation may be installed in one location on the storage device, although this will be at a location not known in advance, where there is space to accommodate the installation. Larger installations will be split over a plurality of locations, again at "random" locations (i.e. not predetermined) depending upon available storage capacity. It is not possible to predict where a particular installation will be stored on a storage device (which could be physical or virtual). The invention utilises the fact that attempting to copy a piece of software will result in it being saved in one or more different locations, again which cannot be determined in advance. The chance of a copied version being in identical locations on the target storage media is extremely small. Aspects and embodiments of the invention can be used with any storage device that uses a location referencing system.

In aspects and embodiments of the invention, where software has been installed under authorisation, the location data of the software (or a part or a file thereof) will match location data determined and stored during installation of that software. Only then will be software be able to be run. I.e. if any unauthorised installation or copying has occurred, the software will not be able to be run.

There may further be provided a computer program which, when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a computer readable medium, which may be a physical computer readable medium, such as a disk or a memory device, or may be embodied as a transient signal. Such a transient signal may be a network download, including an internet download.

Embodiments of the invention will now be described with reference to the Figures of the accompanying drawings in which:
Figure 1 shows a representation of file storage on a hard disk drive;
Figure 2 is a block diagram of apparatus used for carrying out the method of aspects and embodiments of the invention;
Figure 3 is a flow chart of a method incorporating an embodiment of the invention; and
Figure 4 is a flow chart of another method incorporating another embodiment of the invention.

### Detailed description of embodiments of the invention

A software program comprises one or more components in the form of electronic files that are held on a storage device. Storage devices are available in a variety of different types, including magnetic storage devices, optical storage devices, flash drives, solid state drives as well as online and cloud based storage. Magnetic storage is common in computer hard drives. Commonly used magnetic media (MM) can either be in the form of magnetic discs or solid state memory which, in turn, can be attached to standalone PCs, Laptops, File Server Networks, SANs (Storage Area Networks), NASs (Network Attached Storage), etc.

Access to MM is through an operating system, and the particular operating system (OS) will format MM in such a way that each magnetic file placed in storage can be located through a reference location which, in Microsoft^{™} (MS) terminology, for a hard disk is the cluster number where the file starts. This reference location can be considered as a coordinate system, in a similar way that we can navigate to places on the globe via latitude & longitude coordinates.

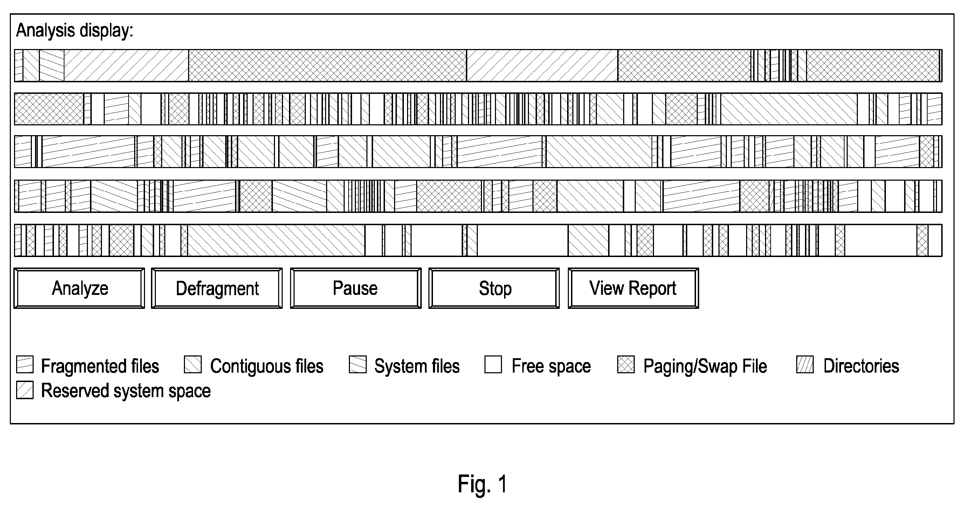

When a file is placed onto MM, the OS will decide where to place it depending on the availability of free space. For example, a 1MB file would need space on the disk at least 1 MB in size but, placing this on the disk may leave small gaps in between. Furthermore, when changes are made to the storage, e.g. files are moved or deleted, this may result in gaps being formed. Figure 1 shows an example representation of fragmentation on a disk where the bands show the storage locations of various files, with the white spaces in between representing free space on the disk.

Unless one MM device has been cloned from another, the free space pattern of any two MMs will be vastly different from each other, as each will have a totally different history of how applications and data files have been loaded onto them. Given this situation, if a particular application/system were loaded onto two different MMs, then the likelihood that the component files will end up in the same location on the two MMs will be extremely low.

As such, if the system components are copied from one MM to another, then any one particular component copied will not end up in the same location on the destination MM as it was on the source MM.

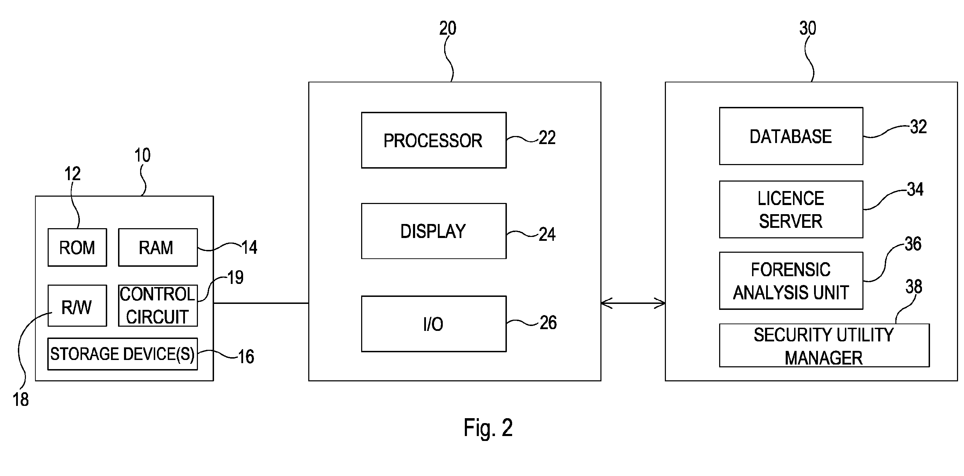

Figure 2 depicts a storage device 10 that is part of or is otherwise in communication with a user machine or terminal 20, e.g. a personal computer (PC). The PC 20 is in wired or wireless communication with a server or data centre 30. For the purposes of the following discussion, and by way of example, the storage device 10 is a magnetic storage device (MM). It will however be appreciated that, and as will become clear later on, other types of storage device can be used with aspects and embodiments of the present invention. Aspects and embodiments of the present invention can be used with any kind of storage device that has or uses a referencing system for indicating the location of content stored therein or thereon.

A typical MM comprises a read only memory (ROM) 12 and a random access memory (RAM) 14. One or more magnetic disks 16 are written to/read from by a read/write device 18 under the control of a control circuit 19. (In other embodiments, where the storage device is not a MM, the storage device(s) may be one or more other disks etc. e.g. optical disks.)

The PC has a processor 22, a display 24 and one or more input/output devices/controls 26.

The remote server/data centre 30 comprises a database 32 for storing details of the software, authorized users and/or other information required for activation/registration of the software etc. A license server 34 governs the issuance, use and termination of licenses for using the software. A forensics/analysis unit 36 comprises algorithms for analysing data from the database e.g. to monitor when permissible and impermissible attempts to install and/or use the software have been attempted. A security utility manager or module 38 is responsible for regulating the rights to install software on a machine or network and/or to check whether or not attempted access to installed software is valid or authenticated. Any one or more of these components may be stored in a physical or virtual location.

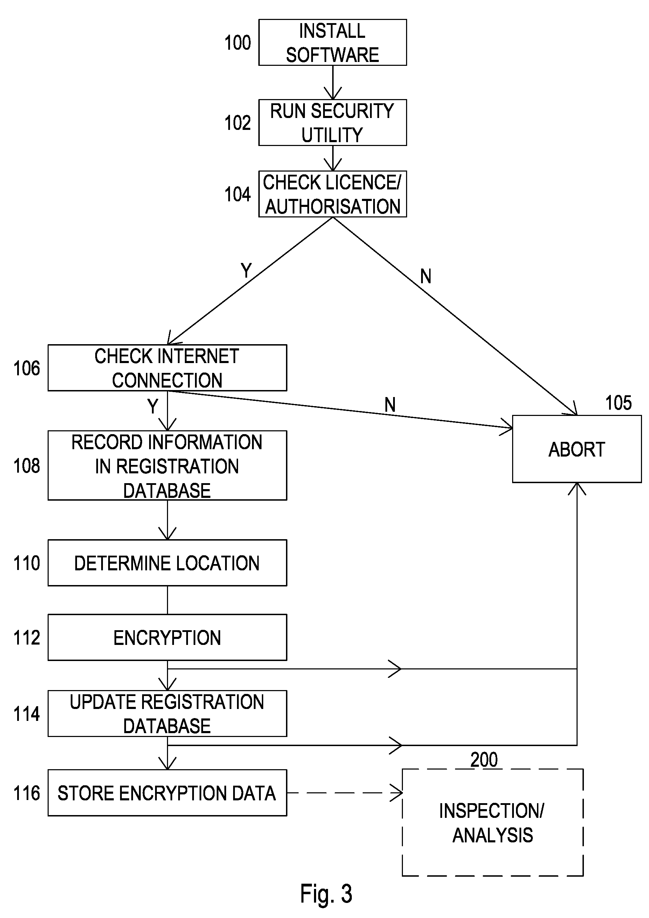

Figure 3 illustrates a method incorporating an embodiment of the present invention, for "activating" software or other data. Initially, in step 100, a user initiates installation of some software on their machine or server 20 using an installation routine. The installation optionally forms part of an embodiment according to the invention, but may alternatively be a prerequisite thereto. In an embodiment, a user installs a piece of software and then runs the security utility 38. Alternatively, the security utility could be part of the installation procedure.

In step 102, the security utility 38 is run to authenticate the user/entity making the request to install the software. This may comprise checking that the installation has occurred or is occurring on a valid and/or authenticated machine or network e.g. an internal company network. Alternatively, this may comprise authenticating a user or request on another machine or network. A valid license number or a password may be requested. For example, a user may be prompted to input a license number. The security utility module 38 checks the license against data from the license manager module 34 and, if the license is registered and valid, grants access to proceed with the installation of the software (Y); otherwise access is denied and the installation process is aborted (N) at step 105. Of course, a user may inadvertently enter an incorrect password or license number, and so the security utility module 38 may permit multiple (e.g. any number between and including three and ten, or otherwise) attempts before aborting at step 105. The security utility module 38 may additionally, or alternatively, check whether the software is designed or intended to run in the data centre 30 and, if not, may abort at step 105.

In an embodiment, if the previous checks have been affirmative the utility 38 checks, in step 106, whether there is an internet connection between the user's computer 20 and the registration site (e.g. the website of the authority governing installation and use of the software). Where online registration of the software is required as part of the installation process, if there is no internet connection (N), the procedure is again aborted (step 105). If an internet connection to the registration site exists (Y), a user will be led through the installation procedure and/or prompted to input any data required for the installation.

In step 108, the security utility 38, utilizing the detected internet connection, writes information to the online registration database 32. Data that may be recorded may include one or more of the following: registration in process flag, date, time, IP address and license number (if applicable), although this list is not exhaustive.

In step 110, the utility determines the physical location of the file being installed on the MM 10. Preferably this is in the form of location co-ordinates e.g. a sector and block reference. Where the installation requires storage capacity comprising a plurality of sectors and blocks, it is convenient and conventional for the location co-ordinates to represent the starting point of the storage used, but a different location and other criteria could in principle be used. Typically, a MM comprises a platter, each of which is divided into concentric rings or tracks. Each track is divided into sectors, which can accommodate a predetermined amount of data. The utility 38 then encrypts the determined location co-ordinates (step 112). In an embodiment, the location value is encrypted using a one-way salted hash function. The encryption/hashing can occur at, during or after installation.

In an embodiment, encryption is via a one-way salted industry strength SHA-2 hash function. The encrypted location is stored in a configuration file. Using a one-way salted hash for encryption ensures that the hash string cannot be decrypted by a mathematical formula or cannot be looked up in a rainbow table. SHA-2 is a set of cryptographic hash functions (SHA-224, SHA-256, SHA-384, SHA-512, SHA-512/224, SHA-512/256) designed by the U.S. National Security Agency (NSA) and published in 2001 by the NIST as a U.S. Federal Information Processing Standard (FIPS). SHA stands for Secure Hash Algorithm. SHA-2 includes a significant number of changes from its predecessor, SHA-1. SHA-2 currently consists of a set of six hash functions with digests that are 224, 256, 384 or 512 bits. In cryptography, a salt is random data that is used as an additional input to a one-way function that hashes a password or passphrase. The primary function of salts is to defend against dictionary attacks and pre-computed rainbow table attacks. A rainbow table is a pre-computed table for reversing cryptographic hash functions, usually for cracking password hashes.

Importantly, the invention encrypts actual, physical location data rather than, for example, using the virtual location of software sitting in a folder e.g. a virtual file locator/bookmark.

Advantageously, the data being encrypted is simple physical location data, although the output encrypted data itself may be physical or virtual.

In step 114, the registration database is updated. Data that may be recorded include one or more of the following: registration complete flag, date, time, IP address and license number (if applicable), although this list is not exhaustive. In an embodiment, if the internet connection is no longer available and the update fails (N), the procedure can be aborted at step 105.

The utility module 38 then writes the encrypted location data (the hash string) to the MM. This may be in the MS Windows Registry if Windows is the underlying operating system, or in a configuration file if the underlying operating system is Unix (step 116).

At any time during or after the security utility procedure, the forensic/analysis unit 36 may inspect the online registration database for suspicious installation activity patterns and/or may inspect records of aborted procedures (step 200). Depending on the information recorded, further investigation of the circumstances may be conducted.

Importantly, information confirming that successful (i.e. authorised) activation/registration has occurred can be stored.

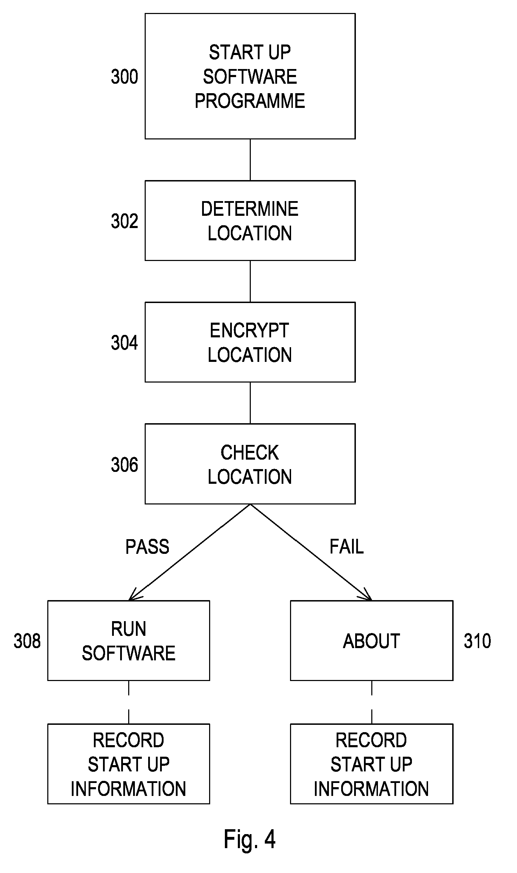

Figure 4 depicts checks that are made at or during software runtime. In step 300, a user starts up a software program that has been installed on their machine/MM 10. The operating system determines, in step 302, the physical location coordinates of the software or a specified part or file of the software designated for comparison purpose. In step 304, the determined location coordinates are encrypted using a hash function as previously described. In step 306, the software program compares the encrypted location from step 304 against the stored encrypted location stored e.g. stored in a configuration file (from step 116). If the two hash strings match ("PASS"), the software program can continue to run (step 308). Otherwise, of the hash strings do not match ("FAIL"), the opening/running of the software program is aborted (step 310).

Information related to software start-up, or attempts at starting the software, can be recorded for real-time or future analysis.

If the system has been copied, bypassing the registration process, then the likelihood of the two hashed strings matching is very low for the reasons described above. Similarly, if unauthorised access is attempted, an unauthorised user will not have a valid, matching hash string (encrypted location data). In these events the software may not run or, if the checking procedures are part of the installation process, installation itself may be halted. In the event of an unauthorised access attempt, the software may be uninstalled and/or a message may be sent to the software authorising body to inform it of the unauthorised access attempt.

In some instances the utility that set up the configuration file with the hashed locations will need to be rerun e.g. if the software fails to run after a defragmentation of the MM (where file locations may change), a move of a file to another MM, or if a rebuild of the MM is required for any reason.

By way of an example, assume a software system comprises just three files:
- program.exe - the executable program
- program.prm - program file - holds non-changing parameter information
- program.cfg - configuration file - holds the encrypted hash for the location coordinates of the specified file

The specified file used for the location coordinates would need to be a read-only file, and could be either program.exe or program.prm, but assume it is program.prm for this example.

The activation utility 38 when run, and if successful, will determine the location of program.prm (step 110), encrypt it (step 112), and then place the hash string into the program.cfg file (step 116), and/or it could be stored elsewhere.

Even if a rogue installer were to deduce what the specified file was, and in which file the hashed string was held, the strength of the hash encryption function would foil all attempts at copying the software, and bypassing the correct installation and activation process. If a protected file is copied without going through the "activation" process of Figure 2, then copying the program components to another computer disk, or using a hacked installation procedure is highly unlikely to work as the probability of being installed to exactly the same location on a different disk is extremely low.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, and reference signs in the claims shall not be construed as limiting the scope of the claims.

## Claims

1. A method of controlling access to software installed on a storage device, the method comprising:
determining the physical location of software, or a part thereof, on a storage device;
comparing the determined location of software with a predefined physical location; and
where the location and the predefined location do not match, denying access to and/or preventing execution of the software.

2. The method of claim 1, wherein the determined location and/or the predefined physical location is a location co-ordinate such as a sector and block.

3. The method of claim 1 or 2, further comprising encrypting the determined location and, optionally, storing the encrypted determined location.

4. The method of claim 3, wherein the predefined location is encrypted.

5. The method of claim 3 or 4, wherein the encryption of the determined location and/or the predefined location uses a set of cryptographic hash functions.

6. The method of any preceding claim, further comprising recording an instance of the method being performed in a database.

7. A method of activating software installed on a storage device or during installation of said software, the method comprising:
checking one or more parameters to determine if a user is or was entitled to install software on a storage device;
determining the physical location of said software, or a part thereof, on said storage device;
storing the determined physical software location; and
storing data confirming the software has been successfully activated in accordance with said one or more parameters or that the software was not successfully activated in accordance with said one or more parameters.

8. The method of claim 7, wherein the location is a location coordinate such as a sector and block.

9. The method of claim 7 or 8, further comprising encrypting the location and, optionally, storing the encrypted location.

10. The method of claim 9, wherein the encryption of the location uses a set of cryptographic hash functions.

11. The method of any of claims 7 to 10, wherein the step of checking one or more parameters to determine if a user is or was entitled to install software on a storage device further comprises determining the presence of a valid licence number and/or execution on a predefined network.

12. The method of any preceding claim, further comprising recording information relating to activation of said software including whether or not activation was successful and/or user details.

13. A system for controlling access to software installed on a storage device, the system comprising:
an access control module configured to determine the physical location of software, or a part thereof, on a storage device, compare the determined physical location with a predefined physical location and, where the location and the predefined location do not match, deny access to or prevent execution of the software.

14. A system for activating software installed on a storage device, the system comprising:
an access control module configured to check one or more parameters to determine if a user is entitled to install software on a storage device, determine the physical location of said software, or a part thereof, store the determined physical location and store data confirming the software has been successfully activated in accordance with said one or more parameters or confirming the software has not been successfully activated in accordance with said one or more parameters.

15. The method of any of claims 1 to 12 or the system of claim 13 or 14, wherein the storage device is a magnetic medium storage device such as a magnetic disk or solid state memory.
